# EUROPÄISCHE PATENTSCHRIFT

(11) **EP 4 314 755 B1**
(45) Veröffentlichungstag und Bekanntmachung des Hinweises auf die Patenterteilung: **29.05.2024**
(21) Anmeldenummer: 23705515.7
(22) Anmeldetag: 14.02.2023
(51) Int. Cl.: G01M 13/005

(54) **VERFAHREN ZUR BESTIMMUNG DES VERSCHLEISSVOLUMENS EINER GLEITRINGDICHTUNG BEI SINGULÄREN VERSCHLEISSEREIGNISSEN MITTELS ZEITLICH HOCHAUFGELÖSTER TEMPERATURMESSUNG**
METHOD FOR DETERMINING THE WEAR VOLUME OF A SLIDING-RING SEAL IN SINGULAR WEAR EVENTS BY MEANS OF HIGH-TEMPORAL-RESOLUTION TEMPERATURE MEASUREMENT
PROCÉDÉ DE DÉTERMINATION DU VOLUME D'USURE D'UN JOINT À ANNEAU COULISSANT DANS DES ÉVÉNEMENTS D'USURE SINGULIERS AU MOYEN D'UNE MESURE DE TEMPÉRATURE À HAUTE RÉSOLUTION TEMPORELLE

(30) Priorität: 21.03.2022 DE 102022000970
(43) Veröffentlichungstag der Anmeldung: 07.02.2024
(73) Patentinhaber: Otschik, Joachim, 82418 Murnau (DE)
(72) Erfinder: Otschik, Joachim, 82418 Murnau (DE)
(74) Vertreter: Müller-Boré & Partner Patentanwälte PartG mbB
(86) Internationale Anmeldenummer: PCT/EP2023/053604
(87) Internationale Veröffentlichungsnummer: WO 2023/179974

(56) Entgegenhaltungen:
- DE-B4-102018 003 866
- US-A1- 2022 034 406

## Beschreibung

### Gebiet der Erfindung

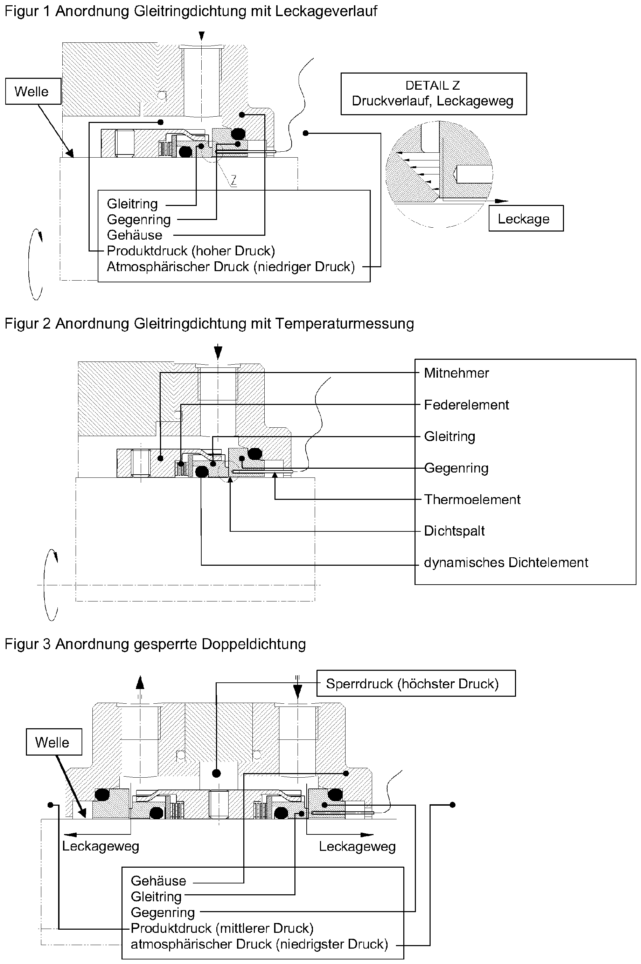

Gleitringdichtungen (Figur 1) sind Maschinenelemente, welche zum Abdichten von rotierenden Fördereinrichtungen verwendet werden. Zu diesen Fördereinrichtungen zählen fast alle Pumpen und Verdichter, die weltweit im Einsatz sind. Ziel einer Gleitringdichtung ist die Maximierung der Dichtigkeit, bzw. die Minimierung von Leckagen bei gleichzeitig geringem Energieverbrauch. Zentrale Elemente dieser Gleitringdichtungen sind der Gleit-und der Gegenring. Die Hauptabdichtung findet zwischen diesen beiden Ringen, zwischen denen sich ein Dichtspalt im Submikrometerbereich einstellt, statt. Durch die Anforderung, die Emissionen (Leckagen) zu minimieren, wird die Höhe des Dichtspaltes ebenfalls minimiert. Dies führt im Betrieb mit variierender zeitlicher Häufigkeit zum Kontakt von Gleit-und Gegenring und damit zum Verschleiß. Ohne diesen Kontakt von Gleit- und Gegenring gäbe es keinen Verschleiß.

Die Erfindung befasst sich mit einem Meßverfahren, welches den Verschleiß und die Verschleißrate (Verschleiß pro Zeiteinheit) bestimmt. Dadurch gelingt es während des Betriebes einer Gleitringdichtung erstmalig, die zu erwartende Lebensdauer der Gleitringdichtung mit einer praktikablen Genauigkeit bestimmen zu können.

### Hintergrund der Erfindung

Seit mehr als zwanzig Jahren gibt es verschiedenste Ansätze, den Verschleiß (Verschleißvolumen, Verschleißhöhe) und die Verschleißrate in Gleitringdichtungen zu messen. Prinzipiell unterscheidet man zwischen Meßverfahren mittels direkter Größen und indirekter Größen. Zu den direkten Meßverfahren zählen:
- Verschleißhöhe
- Tracer

Zu den indirekten Meßverfahren zählen:
- Schwingung (Körperschall, Vibration)
- Digitaler Zwilling: Kombination von Temperatur, Druck, Drehzahl, Fluid, Geometrie
- Drehmoment
- Leckage
- Temperatur

*Verschleißhöhe:* Verschleißhöhensensorik ist nach dem aktuellen Stand der Technik ein praktikables Meßverfahren, um Verschleiß zu bestimmen. Dafür wird z.B. im Dichtspalt ein Verschleißelement appliziert. Ändert sich die Höhe, bzw. die Dicke dieses Verschleißelementes, ändert sich z.B. der elektrische Widerstand des Verschleißelementes.

Eine andere Bauform ist die Einbringung eines Kontaktes in den zu verschleißenden Körper, der ein Signal sendet, wenn durch den Verschleiß der Kontakt erreicht wird. Mehrere Kontakte in verschiedenen Verschleißhöhen sind möglich.

Nachteile dieser Lösungen sind jedoch die örtliche Einschränkung der Messung und die Sensitivität, insbesondere bei Ringen aus sehr hartem Material, wie Siliziumkarbid. Denn bei Gleitringdichtungen mit Siliziumkarbidringen reichen bereits wenige Mikrometer (1-10µm) Verschleiß aus, um diese in ihrer Dichtungsfunktion stark zu beeinträchtigen.

*Tracer:* Tracerbasierte Verschleißmessungen sind hochauflösend. Dafür werden die Gleit-und Gegenringe mit Tracern dotiert, die dann außerhalb der Gleitringdichtung mit dem Abrieb in der Gasphase oder in der Flüssigkeitsphase gemessen werden können. Jedoch der technische Aufwand für diese Messungen ist sehr hoch. Deshalb wird diese Messmethode in der Regel nur im Labor eingesetzt.

*Schwingung:* Die aktive und passive Schwingungsmessung in allen technisch relevanten Frequenzbereichen ist Stand der Technik und wird für die Zustandsanalyse von Pumpen, als auch von Gleitringdichtungen herangezogen.

Zwei wesentliche technische Nachteile sind festzustellen. Schwingungsmessungen haben das Problem, in einer Umgebung funktionieren zu müssen, die mit fremden Schallsignalen angereichert ist. Das Filtern dichtungsrelevanter Signale ist jenseits des Laboreinsatzes sehr aufwendig, manchmal auch nicht möglich.

Mit angeregten Meßsystemen kann das Filtern relevanter Signale verbessert werden. Die Antwortfunktion beschreibt jedoch nicht das Verschleißverhalten, sondern die Kopplungsfläche und deren Größenverteilung (der einzelnen Kontaktflächen) im µm²-Bereich zwischen Gleit- und Gegenring.

*Digitaler Zwilling:* Ein digitaler Zwilling ist die modellbasierte Abbildung des Verhaltens eines Bauteils bzgl. div. Zielgrößen. Für die Gleitringdichtung reichen die Größen Fluid-Temperatur, Drehzahl, Fluid-Druck, sonst. Fluideigenschaften inkl. der Geometrie, der Materialeigenschaften der Dichtung aus, um den sich einstellenden Dichtspalt zwischen Gleit- und Gegenring zu berechnen. In diesen Modellen wird immer davon ausgegangen, daß es einen Dichtspalt gibt, sei er noch so klein. Die Flächen von Gleit- und Gegenring berühren sich in diesen Modellen nicht. Deshalb können sie für die Berechnung des Verschleißes, basierend auf Kontakt, von Gleitringdichtungen nicht herangezogen werden.

Die instationäre Modellierung des Verschleißes auf atomarer Basis ist prinzipiell denkbar, scheitert aber an der dafür notwendigen Größe des Kontaktes wegen der limitierten Rechenleistung aktueller Großrechner.

*Drehmoment:* Die mechanisch entkoppelte Messung des Drehmomentes zwischen Gleit-und Gegenring ist möglich, jedoch technisch sehr aufwendig und oft wegen des fehlenden Einbauraumes technisch nicht praktikabel.

*Leckage:* Bei gesperrten Dichtungssystemen mit zwei Gleitringdichtungen (Figur 3) ist die Messung der Leckage und deren zeitliche Veränderung ein guter Indikator, um eine Aussage zur Dichtungsfunktion der beiden Gleitringdichtungen machen zu können.

Bei einfach wirkenden Gleitringdichtungen kann man die Leckage nur auf der druckabgewandten Seite, also zur Atmosphäre messen. Dies gelingt technische jedoch nur, wenn die Dichtung standardmäßig höhere Leckagen aufweist. Diese Dichtungen haben einen Dichtspalt, der für die entsprechende normale, leicht höhere Leckage sorgt. Verschleiß findet wegen des fehlenden Kontaktes von Gleit- und Gegenring nicht statt, es sei denn, die Dichtungen kontaktieren bei An- und Abfahrprozessen.

Kontakttierende Dichtung dagegen, zeigen eine oft praktisch nicht meßbare Leckage, weil der größte Teil der Leckage (besonders bei Wasseranwendungen) verdampft. Kritische Verschleißzustände treten zudem auch auf, wenn die Leckage, bzw. der Dichtspalt gegen Null geht. Diese sind bei kontaktierenden Dichtungen mittels Leckagemessungen nicht detektierbar.

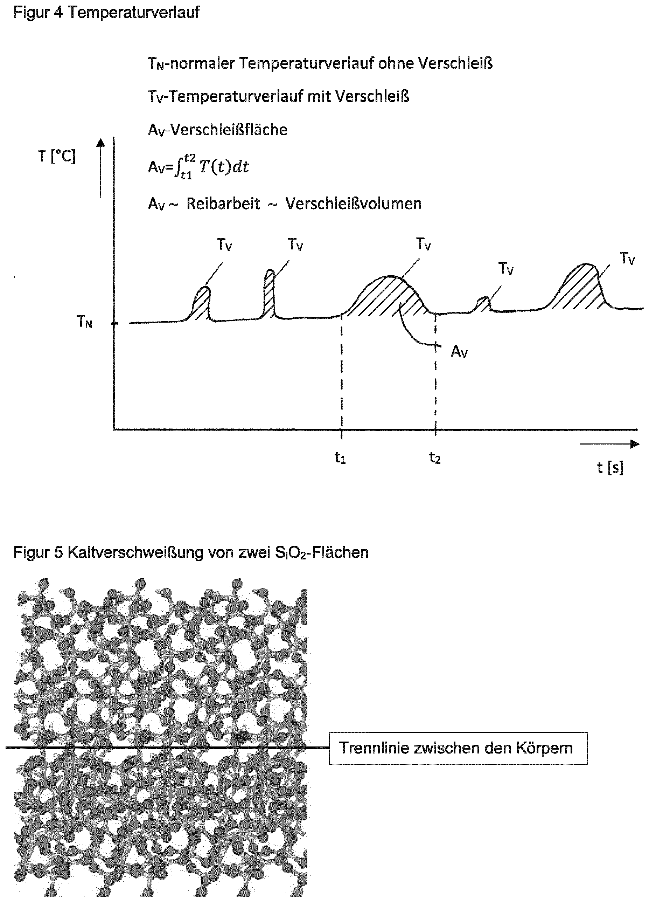

*Temperatur:* Die Messung der Temperatur von Gleit- und Gegenringen in Gleitringdichtungen ist Stand der Technik. Ausgewertet wird die Normaltemperatur T_{N} (Figur 4). Diese Temperatur sagt jedoch nichts aus über den Verschleiß, den Verschleißzustand und die Verschleißrate von Gleit- und Gegenring. Sie wird bestimmt (stellt sich ein) durch die Temperatur des abzudichtenden Mediums, der Medieneigenschaften, der Dichtungsbauform und der Drehzahl. Sie ist Teil der bereits beschriebenen Meßmethode "Digitaler Zwilling".

Für den Stand der Technik wurden folgende Druckschriften herangezogen:
/1/ DE 10 2007 026 743 A1
/2/ DE 10 2018 125 969 A1
/3/ DE 197 24 308 A1
/4/ EP 3 139 072 A1
/5/ EP 3 502 525 A1

US 2022/0034406 A1 beschreibt ein Verfahren, welches mittels Änderung des Volumens des Sperrmediums in einem zylindrischen Speicherbehälter auf das Verschleißvolumen an der Dichtung schließt. Dieses Verfahren wird nicht für Gleitringdichtungen, sondern für statische Wellenabdichtungen verwendet. Im Gegensatz dazu wird bei Gleitringdichtungen das Sperrmedium kontinuierlich nachgefördert. Deshalb kann mit dem beschriebenen Verfahren das Verschleißvolumen von Gleit-und Gegenring (in einer Gleitringdichtung) im µm3-Maßstab nicht gemessen werden. DE 10 2018 003866 beschreibt ein Verfahren zur Bestimmung des Verschleißzustandes einer radialen Dichtung mittels dreier Messgrößen: Temperatur, Gaskonzentration eines vom Dichtungselementes abgegebenen Gases und Motordrehmoment (Last). Mindestens zwei der Meßgrößen müssen gemäß eines vorgegebenen Lastdiagrammes abweichen, um einen abnormalen Verschleiß zu bestimmen. Die radiale Dichtung ist keine Gleitringdichtung. Das Verfahren erlaubt nur eine qualitative Aussage, ob abnormaler Verschleiß vorliegt.

### Beschreibung der Erfindung

Die vorliegende Erfindung wurde vor dem Hintergrund des vorstehend beschriebenen Standes der Technik gemacht, wobei die Aufgabe der vorliegenden Erfindung war, ein praktikables Verfahren bereitzustellen, mit dem es möglich ist, den Verschleiß von Gleit- und Gegenringen in Gleitringdichtungen zu messen, zu kumulieren und somit einen technischen Ausfall mit hoher Güte bzgl. der zeitlich zu erwartenden Eintrittswahrscheinlichkeit vorherzusagen.

Die Aufgabe wurde durch ein Meßverfahren gelöst, welches die indirekte Größe Temperatur am Gleit- oder am Gegenring **zeitlich hochaufgelöst** misst. Es hat sich unerwartet gezeigt, daß bei zeitlich hochaufgelöster Temperaturmessung von Gleit- oder Gegenring in einer Gleitringdichtung typische Temperaturverläufe (Figur 4) auftreten, welche einen direkten Rückschluß auf das Verschleißverhalten ermöglichen. Die typische Meßzeit eines solchen Ereignisses liegt in der Regel im Bereich von wenigen Millisekunden bis 60s, die Temperaturänderung (Tv=f(t)) im Vergleich zur "Normaltemperartur" (T_{N}) bei kleiner 10K.

Beim makroskopischen "Kontakt" von zwei sich bewegenden Flächen, hier die Kontaktflächen von Gleit- und Gegenring sind typischerweise drei tribologische Zustände auf kleiner Längenskala beschreibbar, atomarer Kontakt mit Verbindung der Flächen auf Molekülebene (sog. Kaltverschweißung (Figur 5)), atomarer Kontakt mit inerten Oberflächen (kleine Scherkräfte) und Flächen, zwischen denen ein dünner Flüssigkeitsfilm geschert wird. Alle drei tribologischen Zustände führen in Summe zu einer Gesamtscherkraft, bzw. zu einem Reibwert, wenn die Scherkraft auf die Normalkraft bezogen wird. Es hat sich gezeigt, daß der Anteil der kaltverschweißten Kontakte instationär ist. Die kaltverschweißten Kontakte führen aber in jedem Fall, je nach Materialpaarung von Gleit- und Gegenring und den äußeren Randbedingungen zum plötzlichen Herausbrechen kleinster Materialbestandteile aus der Kontaktfläche. Dieser Prozeß (Herausbrechen) verbraucht Energie, da die Oberfläche beim Herausbrechen größer wird (Oberflächenenergie). Danach jedoch kommt es zu einem kurzzeitigen Anstieg der Temperatur auf sehr kleiner Zeitskala (Figur 4, Tv). Dies liegt an den herausgebrochenen Materialbestandteilen, die im Dichtspalt anschließend zerrieben und ausgetragen werden. Je mehr Partikelvolumen herausgebrochen wird, je länger diese Partikel im Dichtspalt verbleiben, desto höher und länger ist der gemessene kurzzeitige Temperarturanstieg. Dieser Austragsprozeß ist dichtungsabhängig (Geometrie, Materialien, Druck, Temperatur, Drehzahl, Fluid...) und somit überraschend gut reproduzierbar. Das heißt, die Fläche (A_{V}) unter der Funktion T=f(t) ist dichtungspezifisch direkt proportional zur Reibarbeit und zum gesuchten Verschleißvolumen. Dieses Verfahren kann man erfindungsgemäß sehr einfach nutzen, um einen Gesamtverschleiß auf großer Zeitskala zu messen bzw. zu berechnen. Man benötigt lediglich eine Temperaturmeßeinrichtung, z.B. ein Thermoelement im Gleit- oder Gegenring, idealerweise im stationären Ring der Gleitringdichtung. Der gemessene Temperatur-Zeitverlauf hängt, wie beschrieben, von der Wärmequelle (Reibung durch Verschleißpartikel) und den Wärmetransport- und Speicher- Randbedingungen der Gleitringdichtung ab. Sind die Wärmetransportrandbedingungen bekannt, besteht zu dem die Möglichkeit, das Meßverfahren zur Verschleißmessung dahingehend zu erweitern, daß einzelne Verschleißereignisse tribologisch tiefergehend untersucht werden können (Trockenlauf, Verschleiß durch externe Partikel, Verschleiß durch herausbrechende Partikel, Größe der Partikel).

In der Praxis ist es oft schwierig, jedes eingesetzte Dichtungsdesign in seiner realen Anwendung im Labor zu testen. Aber auch hier ermöglicht das erfindungsgemäß beschriebene Meßverfahren eine praktikable Lösung. Unter der Annahme, daß Gleitringdichtungen bei konstanten Randbedingungen immer wieder ähnlich verschleißen, ergibt sich die Möglichkeit, den Ausfallzeitpunkt vorhersagen zu können. Man nutzt dazu eine erste sogenannte Opfer-Dichtung zur Kalibrierung des maximal möglichen Verschleißes bis zum Ausfall unter Zuhilfenahme des beschriebenen Meßverfahrens. Die folgenden, danach eingebauten Dichtungen nutzen die Ergebnisse der Opferdichtung.

## Patentansprüche

1. Verfahren zur Bestimmung des Verschleißvolumens einer Gleitringdichtung bei singulären Verschleißereignissen, wobei eine Temperatur (T_{V}) am Gleit- oder am Gegenring der Gleitringdichtung zeitlich hoch aufgelöst gemessen wird, wobei eine Fläche (A_{V}) unter einer Funktion des gemessenen Temperaturverlaufes (T_{V} = f(t)) bei kurzzeitigen Temperaturänderungen (dt), die kleiner sind als 60s, gegenüber einer Normaltemperatur (T_{N}), die dem Temperaturverlauf einer Gleitringdichtung ohne Verschleiß entspricht, durch die Messung der Temperatur (T_{V}) mit anschließender Integration der Funktion des gemessenen Temperaturverlaufes (T_{V} = f(t)) bestimmt wird, wobei die bestimmte Fläche (A_{V}) mit einem dichtungsspezifischen Faktor multipliziert wird, um das Verschleißvolumen zu berechnen.

2. Verfahren nach Anspruch 1, wobei ein Gesamtverschleiß zu einem Zeitpunkt t und eine Verschleißrate bestimmt werden.

3. Verfahren nach Anspruch 2, wobei der Gesamtverschleiß in ein Verhältnis zum technisch maximal möglichen Verschleiß gesetzt wird, um einen Zeitpunkt eines Dichtungsversagens vorhersagen zu können.

4. Verfahren nach Anspruch 3, wobei eine Eintrittswahrscheinlichkeit des Dichtungsversagens mit jedem neuen Versagensereignis durch die Berücksichtigung historischer Versagensereignisse verbessert wird.

5. Verfahren nach einem der vorhergehenden Ansprüche, wobei das Verfahren zur Bestimmung des Verschleißvolumens einer Gleitringdichtung in zwei Teilprozesse (A, B) zerlegt wird:
A: Bestimmen der Fläche (A_{V}) in einer dezentralen Auswerteeinheit, örtlich nahe der Gleitringdichtung;
B: Weiterleiten dieser bestimmten Fläche (A_{V}) an eine zentrale Auswerteeinheit, welche mit Hilfe einer Dichtungsspezifikation den dichtungsspezifischen Faktor mit der berechneten Fläche (A_{V}) verknüpft, um das Verschleißvolumen berechnen zu können.

6. Verfahren nach einem der vorhergehenden Ansprüche, wobei der dichtungsspezifische Faktor durch Labormessungen vorab bestimmt wird.

7. Verfahren nach einem der vorhergehenden Ansprüche, wobei der dichtungsspezifische Faktor, basierend auf einer einmaligen Messung einer installierten Gleitringdichtung über die gesamte Lebenszeit, also von der Erstinbetriebnahme bis zum Ausfall der Dichtung, berechnet wird.

8. Verfahren nach einem der vorhergehenden Ansprüche, wobei betriebszustandsabhängige Verschleißklassen gebildet werden, die dem Betreiber der Dichtung die Möglichkeit geben, den Verschleiß gezielt durch Vermeidung von Verschleißklassen mit hohem Verschleiß zu minimieren.

9. Verfahren nach einem der vorhergehenden Ansprüche, wobei die singulären Verschleißereignisse spezifischen Ursachen zu geordnet werden, z.B. Trockenlauf oder Eintrag externer Partikel in den Dichtspalt aus einer abzudichtenden Suspension.

10. Verfahren nach Anspruch 1 und 2, wobei von einer mittleren Fläche (A_{V}) für alle singulären Verschleißereignisse ausgegangen wird, so daß zur Bestimmung des Gesamtverschleißes nur die Anzahl der singulären Verschleißereignisse mit einem dichtungsspezifischen Faktor multipliziert wird.

## Claims

1. A method for determining the wear volume of a mechanical seal in the case of singular wear events, wherein a temperature (Tᵥ) is measured at the seal face or seat of the mechanical seal with high temporal resolution, wherein an area (Aᵥ) under a function of the measured temperature profile (Tᵥ = f(t)) in the case of short-term temperature changes (dt) which are less than 60 s, compared with a normal temperature (T_{N}), which corresponds to the temperature profile of a mechanical seal without wear, is determined by measuring the temperature (Tᵥ) with subsequent integration of the function of the measured temperature profile (Tᵥ = f(t)), the determined area (A_{V}) being multiplied by a mechanical seal-specific factor in order to calculate the wear volume.

2. The method according to claim 1, wherein a total wear at a time t and a wear rate are determined.

3. The method according to claim 2, wherein the total wear is set in relation to the technically maximum possible wear in order to be able to predict the time of a mechanical seal failure.

4. The method according to claim 3, wherein a probability of occurrence of the mechanical seal failure is improved with each new failure event by taking into account historical failure events.

5. The method according to any one of the preceding claims, wherein the method for determining the wear volume of a mechanical seal is divided into two sub-processes (A, B):
A: Determining the area (Aᵥ) in a decentralized evaluation unit, locally close to the mechanical seal;
B: Forwarding this determined area (Aᵥ) to a central evaluation unit, which links the mechanical seal-specific factor with the calculated area (Aᵥ) using a mechanical seal-specification in order to be able to calculate the wear volume.

6. The method according to any one of the preceding claims, wherein the mechanical seal-specific factor is determined in advance by laboratory measurements.

7. The method according to any one of the preceding claims, wherein the mechanical seal-specific factor is calculated on the basis of a single measurement of an installed mechanical seal over the entire service life, i.e. from initial operation until the mechanical seal fails.

8. The method according to any one of the preceding claims, wherein wear classes dependent on the operating condition are formed, which give the operator of the mechanical seal the possibility of specifically minimizing the wear by avoiding wear classes with high wear.

9. The method according to any one of the preceding claims, wherein the singular wear events are assigned to specific causes, e.g. dry running or entry of external particles into the sealing gap from a suspension to be sealed.

10. The method according to claims 1 and 2, wherein an average area (Aᵥ) is assumed for all singular wear events, so that only the number of singular wear events is multiplied by a mechanical seal-specific factor to determine the total wear.

## Revendications

1. Procédé de détermination du volume d'usure d'une garniture mécanique d'étanchéité dans le cas d'événements d'usure singuliers, dans lequel une température (Tᵥ) est mesurée au niveau de la face ou du siège d'étanchéité de la garniture mécanique d'étanchéité avec une résolution temporelle élevée, dans lequel une zone (Aᵥ) sous une fonction du profil de température mesuré (Tᵥ = f(t)) dans le cas de changements de température à court terme (dt) qui sont inférieurs à 60 s, par rapport à une température normale (T_{N}), qui correspond au profil de température d'une garniture mécanique d'étanchéité sans usure, est déterminée en mesurant la température (Tᵥ) avec intégration subséquente de la fonction du profil de température mesuré (Tᵥ = f(t)), la zone déterminée (Aᵥ) étant multipliée par un facteur spécifique à la garniture mécanique d'étanchéité afin de calculer le volume d'usure.

2. Procédé selon la revendication 1, dans lequel une usure totale à un instant t et un taux d'usure sont déterminés.

3. Procédé selon la revendication 2, dans lequel l'usure totale est définie en relation avec l'usure techniquement maximale possible afin d'être capable de prédire le moment d'une défaillance de garniture mécanique d'étanchéité.

4. Procédé selon la revendication 3, dans lequel une probabilité d'occurrence de la défaillance de garniture mécanique d'étanchéité est améliorée avec chaque nouvel événement de défaillance en tenant compte d'événements de défaillance historiques.

5. Procédé selon l'une quelconque des revendications précédentes, dans lequel le procédé de détermination du volume d'usure d'une garniture mécanique d'étanchéité est divisé en deux processus secondaires (A, B) :
A : déterminer la zone (Aᵥ) dans un module d'évaluation décentralisé, localement proche de la garniture mécanique d'étanchéité ;
B : transférer cette zone déterminée (Aᵥ) à un module d'évaluation central, qui relie le facteur spécifique à la garniture mécanique d'étanchéité à la zone calculée (Aᵥ) en utilisant une spécification de garniture mécanique d'étanchéité afin d'être capable de calculer le volume d'usure.

6. Procédé selon l'une quelconque des revendications précédentes, dans lequel le facteur spécifique à la garniture mécanique d'étanchéité est déterminé à l'avance par des mesures en laboratoire.

7. Procédé selon l'une quelconque des revendications précédentes, dans lequel le facteur spécifique à la garniture mécanique d'étanchéité est calculé sur la base d'une seule mesure d'une garniture mécanique d'étanchéité installée sur la durée de vie entière, c'est-à-dire de l'opération initiale jusqu'à ce que la garniture mécanique d'étanchéité soit défaillante.

8. Procédé selon l'une quelconque des revendications précédentes, dans lequel des classes d'usure dépendant de la condition d'opération sont formées, lesquelles donnent à l'opérateur de la garniture mécanique d'étanchéité la possibilité de minimiser spécifiquement l'usure en évitant des classes d'usure avec une usure élevée.

9. Procédé selon l'une quelconque des revendications précédentes, dans lequel les événements d'usure singuliers sont attribués à des causes spécifiques, par exemple la marche à sec ou l'entrée de particules externes dans l'espace d'étanchéité provenant d'une suspension devant être étanchéifiée.

10. Procédé selon les revendications 1 et 2, dans lequel une zone moyenne (Aᵥ) est supposée pour l'ensemble des événements d'usure singuliers de sorte que seul le nombre d'événements d'usure singuliers est multiplié par un facteur spécifique à la garniture mécanique d'étanchéité pour déterminer l'usure totale.
